# EUROPÄISCHE PATENTSCHRIFT

(11) **EP 0 780 506 B1**
(45) Veröffentlichungstag und Bekanntmachung des Hinweises auf die Patenterteilung: **13.06.2001**
(21) Anmeldenummer: 96118483.5
(22) Anmeldetag: 18.11.1996
(51) Int. Cl.: D06F 37/30, H02K 7/14, H02K 1/27, H02K 29/00

(54) **Antriebsvorrichtung für eine von vorn beschickbare Waschmaschine**
Driving device for a front-loading washing machine
Dispositif d'entraînement pour une machine à laver à chargement frontal

(30) Priorität: 19.12.1995 DE 19547456
(43) Veröffentlichungstag der Anmeldung: 25.06.1997
(73) Patentinhaber: BSH Bosch und Siemens Hausgeräte GmbH, 81669 München (DE)
(72) Erfinder: Skrippek, Jörg, Dipl.-Ing. (FH), 14641 Priort (DE)

(56) Entgegenhaltungen:
- FR-A- 1 340 648
- FR-A- 1 354 594
- FR-A- 2 008 320
- GB-A- 2 202 867
- US-A- 2 624 856

## Beschreibung

Die Erfindung betrifft eine Antriebsvorrichtung für eine von vorn beschickbare Waschmaschine mit einer innerhalb einer Lagerhülse eines an der Rückwand eines Laugenbehälters angebrachten, steifen Tragteils über eine wenigstens annähernd horizontal liegende Welle fliegend gelagerten Wäschetrommel, die durch einen ebenfalls an der Rückseite des Laugenbehälters angebrachten Motor direkt angetrieben ist, dessen Läufer eine im Vergleich zu seinem Durchmesser kurze Achse aufweist und dessen Ständer das steife Tragteil der Rückwand des Laugenbehälters bildet.

Eine derartige Antriebsvorrichtung ist aus der GB-A-2 202 867 A bekannt. Darin bildet allerdings der Ständer nur einen Teil der Lagerung für die Antriebswelle der Wäschetrommel; die andere Lagerstütze wird vom Läufer des Motors gebildet.

Eine weitere bekannte Antriebsvorrichtung ist aus FR-A 1 340 648 bekannt. Hier ist der Ständer als gesondertes Teil des Motors am steifen Tragteil für die Rückwand des Laugenbehälters befestigt. Zur Kühlung des Motors ist eine besondere Flügelscheibe vor dem Läufer montiert.

Bei der aus DE 43 41 832 A1 bekannten Antriebsvorrichtung ist der Ständer des als kollektorloser Außenläufer-Gleichstrommotor ausgebildeten Motors unmittelbar auf der Lagerhülse des steifen Tragteils befestigt. Die Welle ist in der Lagerhülse gelagert und an ihrem äußeren Ende mit dem Läufer des Motors drehfest verbunden. Dieser Läufer ist hier ein sogenannter Außenläufer, der als Topf die Ständerwicklungen übergreift und als Permanentmagnete ausgebildete Pole trägt. Der Motor ist zusätzlich mit einer Dämmhaube umgeben, die vom Motor direkt an die umgebende Atmosphäre abgestrahlte Geräusche dämpft.

Die aus DE 43 41 832 A1 bekannte Antriebsvorrichtung kapselt den Ständer, der durch Stromwärme in seinen Wicklungen einer erheblichen Temperaturbelastung ausgesetzt ist, durch einen topfförmig gestalteten Läufer und zusätzlich durch die Schalldämmhaube so stark, daß eine Kühlung des Motors überhaupt ausfällt. Dies wird vor allem auch dadurch unterstützt, daß ein derartiger direkt antreibender Motor wegen seiner notwendigerweise geringen Eigendrehzahlen kaum zu einer eigenen Kühlung durch den langsam laufenden Läufer kommen kann. Daher sind die bekannten Antriebsvorrichtungen praktisch nur brauchbar, wenn sie durch eine Fremdkühlung vor schneller Überhitzung geschützt werden.

Der Erfindung liegt die Aufgabe zugrunde, die eingangs bezeichnete Antriebsvorrichtung so zu gestalten, daß eine Kühlung der Ständerwicklungen durch die Umgebungsluft ohne weiteres gewährleistet werden und der Motor sich im ordnungsgemäßen Betrieb bei anforderungsgerechter Dimensionierung nicht überhitzen kann.

Erfindungsgemäß wird diese Aufgabe dadurch gelöst, daß der Ständer des Motors eine zentrale Lagerhülse für die Welle der Wäschetrommel aufweist, an deren äußerem Ende der Läufer des Motors zentriert und gegen die Wäschetrommel unverdrehbar befestigt ist und mit seinen am Umfang verteilten magnetisierbaren Polen über einen minimalen Luftspalt den am Innenumfang eines in den Ständer integrierten Flansches verteilten, zur Aufnahme von Erregerwicklungen des Ständers vorgesehenen Blechpaketen von innen gegenüber steht und daß Teile des Läufers zur Unterstützung einer bei seiner Drehbewegung entstehenden Luftbewegung ausgebildet sind.

Durch die erfindungsgemäße Ausgestaltung erhält der Motor eine offene Bauform, deren wärmeerzeugende Bauteile, das sind vor allem die in diesem Falle außen liegenden Ständerwicklungen, von allen Seiten durch die Umgebungsluft gekühlt werden können. Die Ausbildung von Teilen des Läufers zur Unterstützung der Luftbewegung tut ein Übriges, damit selbst die geringe Motordrehzahl beim Waschbetrieb dann noch für eine genügende Kühlwirkung ausreicht.

Wenn der Motor gemäß einer vorteilhaften Ausführungsform der Erfindung ein elektronisch kommutierter Gleichstrommotor ist, kann überdies die Wärmeentwicklung äußerst gering gehalten werden. Wartungen sind nicht erforderlich (keine Kohlebürsten). Die Lebensdauer ist lediglich durch einen eventuellen Lagerverschleiß begrenzt.

In einer besonders vorteilhaften Weiterbildung der Erfindung ist der Läufer mit einem umgreifenden Paket von Dynamoblechen und darauf angeordneten Dauermagnetsegmenten ausgestattet. Die Dauermagnetsegmente ergeben ein kraftvolles Drehmoment, und die Dynamobleche bilden einen besonders guten magnetischen Rückfluß. Die Herstellung der erforderlichen Blechwickel ist durch Automatisierung des Wickelverfahrens gerade für einen Motor mit innen laufendem Läufer relativ unkompliziert und kostengünstig.

Zur Vereinfachung der Ausbildung des Läufers und seiner Teile, auch derjenigen zur Unterstützung der Luftbewegung, können der Läufer als Tragkörper für das Blechpaket ausgebildet und die Teile zur Unterstützung der Luftbewegung sternförmig angeordnete Speichen sein. Dadurch werden zusätzliche Teile vermieden, die möglicherweise die Luftbewegungen eher behindern könnten.

Vorteilhafterweise werden die Spulen der Erregerwicklungen von den aus Dynamoblechen zusammengesetzten Blechpaketen des Ständers getragen.

Zur erleichterten und reproduzierbar genauen Montage kann die zentrierende Verschraubung des Läufers drehfest an der Welle durch eine Profilwellen-, Profilnaben-, Paßfeder-, Kegel- oder Keilnutverbindung ergänzt sein.

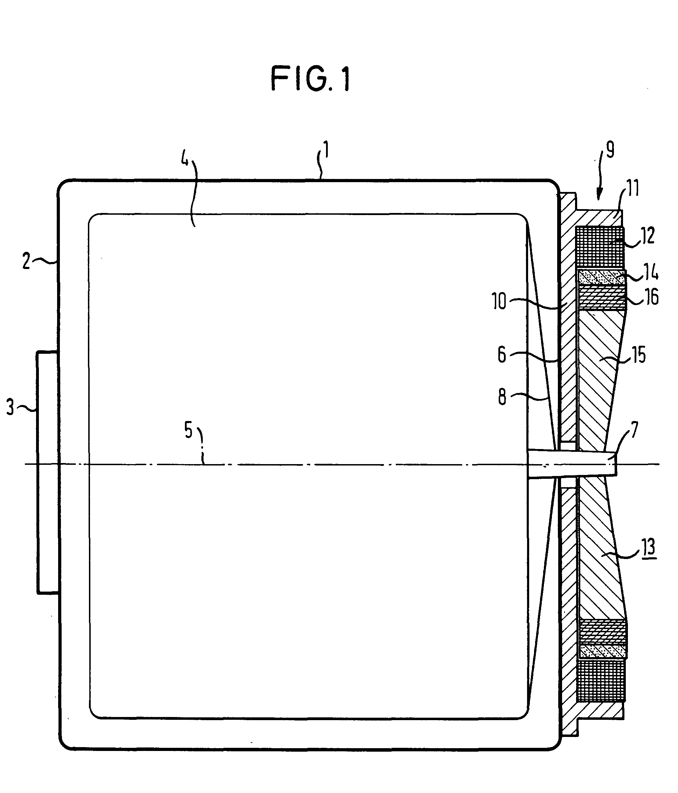

Anhand eines in der Zeichnung dargestellten Ausführungsbeispiels ist die Erfindung nachstehend erläutert. Es zeigen
- Fig.1: eine schematische Darstellung eines Waschmaschinen-Laugenbehälters mit einer innenliegend horizontal gelagerten Wäschetrommel, an deren Antriebswelle der Läufer eines erfindungsgemäßen Motors angeflanscht ist und
- Fig. 2: eine vergrößerte und teilweise geschnitten dargestellte Detail-Ansicht des an der Rückwand montierten Motors gemäß Fig. 1.

Der Laugenbehälter 1 ist auf hier nicht näher dargestellte Weise in einem ebenfalls nicht dargestellten Gehäuse einer Waschmaschine schwingend gelagert. An seiner Vorderwand 2 hat er eine Öffnung 3 zum Be- und Entladen der Wäschetrommel 4, die in der Rückwand 6 des Laugenbehälters 1 um die horizontal liegende Achse 5 drehbar gelagert ist. Dazu dient die Welle 7, die an der Rückwand 8 der Wäschetrommel 4 drehfest mit ihr verbunden ist.

An der Rückwand 6 des Laugenbehälters 1 ist ein Motor 9 montiert, dessen Ständertragteil 10 drehfest mit der Rückwand 6 verbunden ist. An der Innenmantelfläche des Flansches 11 des Ständertragteils 10 sind die Ständerwicklungen 12 verteilt und korrespondieren während der Drehung des Läufers 13 abwechselnd mit dessen Polen 14, die hier aus Permanentmagneten bestehen, die ebenfalls segmentartig am Umfang des Läufers verteilt sind. Der magnetische Rückfluß der Magnetsegmente 14 wird über ein auf die Felge 15 gewickeltes Paket von Dynamoblechen 16 gebildet. Dadurch kann der Motor seine Antriebsmomente unmittelbar über den Wellenzapfen 7 in die Wäschetrommel 4 einleiten.

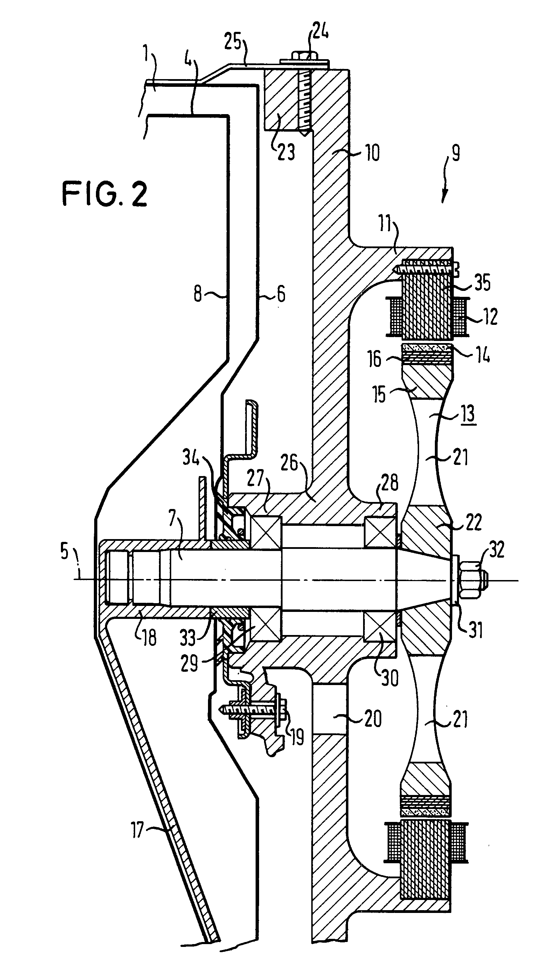

Gemäß Fig. 2 ist die Rückwand 8 der Wäschetrommel 4 mit einem Tragstern 17 versteift, dessen Nabe 18 mit einem Wellenzapfen 7 drehfest verbunden ist. An der Rückwand 6 des Laugenbehälters 1 ist ferner das Ständertragteil 10 drehfest verschraubt (Schrauben 19). Damit ein Waschmaschinen-Monteur im Herstellerwerk für Waschmaschinen das Tragteil 10 an der Rückwand des Laugenbehälters montieren kann, sind über den Schrauben 19 Zugangslöcher 20 im Tragteil angeordnet. Die Läuferscheibe 13 hat ohnehin Speichen 21 zwischen ihrer Nabe 22 und der als Tragring für die Magnetsegmente 14 dienenden Felge 15, so daß der Zugang durch die Speichenzwischenräume hindurch ohne weiteres möglich ist.

Außerdem trägt das Ständertragteil 10 an seinem Außenumfang mehrere, vorzugsweise drei, um den Umfang des Laugenbehälters 1 verteilt angeordnete Befestigungsaugen 23, die mittels Schrauben 24 zusätzlich über an deh Laugenbehälter 1 angeschweißte Laschen 25 eine feste Verbindung zum Laugenbehälter ergeben.

Die Lagerhülse 26 des Ständertragteils 10 bildet Lagersitze 27 und 28 für Wälzlager 29 und 30, deren Innenringe mit einer guten Passung auf den Wellenzapfen 7 der Wäschetrommel 4 aufgezogen und am äußeren Ende mittels einer Druckscheibe 31 und einer zentralen Schraube 32 gesichert sind, so daß sie den Läufer 13 über dessen Nabe 22 und die Innenringe der Wälzlager 29 und 30 drehfest mit der Wäschetrommel verbinden. Dabei ist zwischen der Nabe 18 des Tragsterns 17 der Wäschetrommel 4 und dem Innenring des Wälzlagers 29 ein Abstandsring 33 eingepreßt, der auf seiner Außenseite poliert ist. Mit einem Absatz der Lagerhülse 26 des Ständertragteils 10 ist ein Dichtring 34 verbunden, dessen wellenseitige Dichtlippen mittels eines Federringes auf der polierten Außenseite des Abstandsringes 33 gehalten werden. Seine zur Rückwand 6 des Laugenbehälters 1 weisenden Dichtlippen legen sich mit axialem Druck an eine ebenfalls polierte Ringfläche des Rückwandbleches. Dadurch wird aus dem Laugenbehälter strebende Lauge am Austreten gehindert.

Der Motor kann auch als sogenannter geschalteter Reluktanzmotor ausgeführt werden. In diesem Fall besteht die Felge des Läufers bzw. deren Auflage aus einem ferromagnetisch relativ schlecht leitenden Material. Der Aufbau des Ständers ist mit dem eines elektronisch kommutierten Gleichstrommotors vergleichbar. Der Vorteil des Reluktanzmotors besteht insbesondere in einer kostengünstigeren Gestaltung des Läufers (keine teuren Magnetwerkstoffe).

Zur besseren Verdrehsicherung zwischen dem Läufer 13 und der Welle 7 kann die Verschraubung 31, 32 des Läufers 13 an der Welle 7 durch eine nicht dargestellte Profilwellen-, Profilnaben-, Paßfeder-, Keil- oder Keilnutverbindung formschlüssig ergänzt sein.

## Patentansprüche

1. Antriebsvorrichtung für eine von vorn beschickbare Waschmaschine mit einer innerhalb einer Lagerhülse (26) eines an der Rückwand (6) eines Laugenbehälters (1) angebrachten, steifen Tragteils (10) über eine wenigstens annähernd horizontal liegende Welle (7) fliegend gelagerten Wäschetrommel (4), die durch einen ebenfalls an der Rückseite des Laugenbehälters (1) angebrachten Motor (9) direkt angetrieben ist, dessen Läufer (13) eine im Vergleich zu seinem Durchmesser kurze Achse aufweist und dessen Ständer (10) das steife Tragteil der Rückwand (6) des Laugenbehälters (1) bildet, **dadurch gekennzeichnet,** daß der Ständer (10) des Motors (9) eine zentrale Lagerhülse (26) für die Welle (7) der Wäschetrommel (4) aufweist, an deren äußerem Ende der Läufer (13) des Motors (9) zentriert und gegen die Wäschetrommel (4) unverdrehbar befestigt ist und mit seinen am Umfang verteilten magnetisierbaren Polen (14) über einen minimalen Luftspalt den am Innenumfang eines in den Ständer (10) integrierten Flansches (11) verteilten, zur Aufnahme von Erregerwicklungen (12) des Ständers (10) vorgesehenen Blechpaketen (35) von innen gegenüber steht und daß Teile (21) des Läufers (13) zur Unterstützung einer bei seiner Drehbewegung entstehenden Luftbewegung ausgebildet sind.

2. Antriebsvorrichtung nach Anspruch 1, dadurch gekennzeichnet, daß der Motor (9) ein elektronisch kommutierter Gleichstrommotor ist.

3. Antriebsvorrichtung nach Anspruch 2, dadurch gekennzeichnet, daß der Läufer (13) mit einem umgreifenden Paket (16) von Dynamoblechen und darauf angeordneten Dauermagnetsegmenten (14) ausgestattet ist.

4. Antriebsvorrichtung nach Anspruch 1 bis 3, dadurch gekennzeichnet, daß der Läufer (13) als Tragkörper für das Blechpaket (16) ausgebildet ist und die Teile (21) zur Unterstützung der Luftbewegung sternförmig angeordnete Speichen (21) sind.

5. Antriebsvorrichtung nach einem der Ansprüche 2 bis 4, dadurch gekennzeichnet, daß die Blechpakete (35) des Ständers (10) aus Dynamoblechen zusammengesetzt sind und Spulen (12) mit den Erregerwicklungen tragen.

6. Antriebsvorrichtung nach einem der Ansprüche 1 bis 4, dadurch gekennzeichnet, daß die zentrierende Verschraubung (31, 32) des Läufers (13) an der Welle (7) durch eine Profilwellen-, Profilnaben-, Paßfeder-, Kegel- oder Keilnutverbindung formschlüssig drehfest ist.

## Claims

1. Drive device for a front-loading washing machine with a laundry drum (4), which is mounted in cantilever manner by way of an at least approximately horizontally disposed shaft (7) within a bearing sleeve (26) of a stiff support part (10) mounted at the rear wall (6) of a washing solution container (1) and which is directly driven by a motor (9), which is similarly mounted at the rear side of the washing solution container (1) and the rotor (13) of which has a short axis in comparison to its diameter and the stator (10) of which forms the stiff part of the rear wall (6) of the washing solution container (1), characterised in that the stator (10) of the motor (9) has a central bearing sleeve (26) for the shaft (7) of the laundry drum (4), at the outer end of which the rotor (13) of the motor (9) is centred and fastened to be non-rotatable relative to the laundry drum (4) and by way of a minimum air gap stands opposite, from within, by its circumferentially distributed magnetisable poles (14) to the lamination stacks (35) provided for reception of excitation windings (12) and distributed at the inner circumference of a flange (11) integrated in the stator (10) and that parts (21) of the rotor (13) are constructed to assist an air movement arising during its rotational movement.

2. Drive device according to claim 1, characterised in that the motor (9) is an electronically commutated direct current motor.

3. Drive device according to claim 1, characterised in that the rotor (3) is equipped with an encircling stack (16) of dynamo laminations and permanent magnet segments (14) arranged thereon.

4. Drive device according to claim 1 to 3, characterised in that the rotor (13) is constructed as a support body for the lamination stack (16) and the parts (21) for assisting the air movement are spokes (21) arranged in star shape.

5. Drive device according to one of claims 2 to 4, characterised in that the lamination stacks (35) of the stator (10) are composed of dynamo laminations and carry coils (12) with the excitation windings.

6. Drive device according to one of claims 1 to 4, characterised in that the centring screw connection (31, 32) of the rotor (13) is shape-lockingly secured against rotation by a profiled shaft, profiled hub, key, cone or keyway connection.

## Revendications

1. Dispositif d'entraînement pour une machine à laver à chargement frontal comprenant un tambour à linge (4), logé en porte-à-faux au moyen d'un arbre (7) situé au moins presque horizontalement, à l'intérieur d'un manchon de palier (26) d'une partie de support (10) rigide, disposée sur la paroi arrière (6) d'un conteneur à lessive (1), ledit tambour étant entraîné directement par un moteur (9) disposé également sur le côté arrière du conteneur à lessive (1), dont le rotor (13) présente un axe court en comparaison de son diamètre et dont le stator (10) forme la partie de support rigide de la paroi arrière (6) du conteneur à lessive (1), caractérisé en ce que le stator (10) du moteur (9) présente un manchon de palier central (26) pour l'arbre (7) du tambour à linge (4), sur l'extrémité externe duquel est centré le rotor (13) du moteur (9) et est fixé sans pouvoir être tordu contre le tambour à linge (4) et se trouve avec ses pôles (14) magnétisables, répartis à la périphérie, par un jeu de coussinet minimal en face des paquets de tôle (35), répartis à la périphérie interne d'une bride (11) intégrée dans le stator (10), prévus pour le logement d'enroulements inducteurs (12) du stator (10) et en ce que les parties (21) du rotor (13) sont conçues pour maintenir un mouvement d'air se formant lors de son mouvement de rotation.

2. Dispositif d'entraînement selon la revendication 1, caractérisé en ce que le moteur (9) est un moteur à courant continu commuté électroniquement.

3. Dispositif d'entraînement selon la revendication 2, caractérisé en ce que le rotor (13) est équipé d'un paquet enveloppant (16) de tôles pour dynamo et de segments à aimants permanents (14) disposés dessus.

4. Dispositif d'entraînement selon la revendication 1 à 3, caractérisé en ce que le rotor (13) est conçu comme corps d'appui pour le paquet de tôles (16) et les parties (21) sont des rayons (21) disposés en forme d'étoile pour soutenir le mouvement d'air.

5. Dispositif d'entraînement selon l'une des revendications 2 à 4, caractérisé en ce que les paquets de tôles (35) du stator (10) sont composés de tôles pour dynamo et portent des bobines (12) avec les enroulements inducteurs.

6. Dispositif d'entraînement selon l'une des revendications 1 à 4, caractérisé en ce que le raccord à vis de centrage (31, 32) du rotor (13) sur l'arbre (7) résiste à la torsion par conjugaison de forme grâce à un assemblage à arbre profilé, à moyeu profilé, à ressort d'ajustage, conique ou à rainure de clavette.
